# EUROPÄISCHE PATENTSCHRIFT

(11) **EP 1 943 143 B1**
(45) Veröffentlichungstag und Bekanntmachung des Hinweises auf die Patenterteilung: **14.10.2009**
(21) Anmeldenummer: 07728486.7
(22) Anmeldetag: 25.04.2007
(51) Int. Cl.: B64C 27/20, B64C 27/28, B64C 29/00

(54) **FLUGZEUG**
AIRCRAFT
AVION

(30) Priorität: 26.04.2006 DE 102006019300
(43) Veröffentlichungstag der Anmeldung: 16.07.2008
(73) Patentinhaber: Reinhardt, Gaby Traute, 76470 Ötigheim (DE)
(72) Erfinder: REINHARDT, Gert Joachim, 76470 Ötigheim (DE)
(74) Vertreter: von Kirschbaum, Alexander
(86) Internationale Anmeldenummer: PCT/EP2007/054030
(87) Internationale Veröffentlichungsnummer: WO 2007/122245

(56) Entgegenhaltungen:
- CH-A- 385 031
- GB-A- 935 715
- US-A- 3 073 552
- US-A- 3 231 221
- US-A- 5 419 514

## Beschreibung

Die Erfindung betrifft ein Flugzeug, insbesondere ein als Senkrechtstarter bezeichnetes Flugzeug, das in vertikaler Richtung starten kann.

Bei beispielsweise kleinen Transportflugzeugen besteht das Problem, dass diese stets eine Lande- bzw. Startbahn zum Landen bzw. Starten benötigen. Dies bedingt einen erheblichen Platzbedarf. Ferner ist es erforderlich, entsprechende Flughäfen zu bauen. Ein Starten und Landen außerhalb dieser Flughäfen ist mit herkömmlichen Flugzeugen nicht möglich. Dies ist lediglich mit Helikoptern möglich, die jedoch relativ geringe Transportkapazitäten bezogen auf das Eigengewicht haben. Insbesondere weisen Helikopter den Nachteil auf, dass der Rumpf im Horizontalflug geneigt ist. Ein beispielsweise im Raum stehender Helikopter muss zunächst durch Anstellen der Propellerblätter geneigt werden, um sodann horizontal zu fliegen oder in eine Richtung zu fliegen, die eine horizontale Komponente aufweist. Eine exakte Positionierung eines Helikopters in der Luft ist daher äußerst schwierig.

Ein senkrechtes Starten ist ferner mit sogenannten Quadrocoptern möglich. Zum Lenken der Quadrocopter wird die relative Drehgeschwindigkeit einzelner Rotoren zueinander verändert. Auf Grund des unterschiedlich schnellen Drehens der Rotoren erfolgt ein Kippen des Rumpfs. Eine genaue Positionierung von Quadrocoptern ist daher ebenfalls schwierig.

Aus US 5,419,514, welche den nächstliegenden Stand der technik offenbart, sowie aus GB 9 35 715 ist ein Flugzeug mit Propellerantrieb bekannt. Die einzelnen Propellerantriebe sind um eine horizontale Achse schwenkbar, um die Vorschubsrichtung der einzelnen Propellerantriebe verändern zu können. Das Schwenken der einzelnen Propellerantriebe erfolgt motorisch über ein zwischengeschaltetes Getriebe. Für das Schwenken der einzelnen Propellereinrichtungen ist somit ein zusätzlicher Energiebedarf erforderlich.

Der Erfindung liegt die Aufgabe zu Grunde, ein Flugzeug zu schaffen, dass insbesondere im Raum exakt positionierbar ist.

Die Lösung der Aufgabe erfolgt erfindungsgemäß durch die Merkmale des Anspruchs 1.

Erfindungsgemäß sind die Antriebseinrichtungen des erfindungsgemäßen Flugzeuges derart ausgebildet, dass zur Durchführung eines Horizontalflugs, bzw. eines Fluges mit horizontalem Anteil, ein Kippen bzw. Neigen des Rumpfs nicht oder allenfalls nur geringfügig erforderlich ist. Hierzu weist das erfindungsgemäße Flugzeug mindestens zwei Antriebseinrichtungen auf, wobei mindestens zwei der Antriebseinrichtungen jeweils um mindestens eine Schwenkachse schwenkbar sind. Erfindungsgemäß sind die beiden Schwenkachsen in einem Winkel ungleich null zueinander angeordnet. Die beiden Schwenkachsen sind somit nicht parallel. Das Flugzeug weist mehrere Antriebseinrichtungen auf, die zumindest teilweise vorzugsweise um zwei Schwenkachsen schwenkbar sind. Erfindungswesentlich ist, dass mindestens zwei Schwenkachsen vorgesehen sind, die nicht parallel zueinander ausgerichtet sind. In besonders bevorzugter Ausführungsform weist das erfindungsgemäße Flugzeug mindestens eine Antriebseinrichtung auf, die um zwei oder drei ihrer Schwenkachsen schwenkbar ist. Bei einer Schwenkbarkeit um drei unterschiedliche Achsen handelt es sich vorzugsweise um einen vollständig kardanisch aufgehängten Antrieb. Es ist jedoch möglich auf eine oder zwei der Schwenkachsen zu verzichten, wenn mehrere Antriebseinrichtungen vorgesehen sind, die jeweils um unterschiedliche, zueinander nicht parallele Schwenkachsen schwenkbar sind.

Ein wesentlicher Aspekt der Erfindung besteht darin, dass jede Antriebseinrichtung mindestens zwei Vorschubeinrichtungen, wie Propellereinrichtungen, aufweist. Die mindestens zwei Vorschubeinrichtungen sind mit einer Steuereinrichtung verbunden. Mit Hilfe der Steuereinrichtung kann die Vorschubkraft der einzelnen Vorschubeinrichtungen gesondert eingestellt werden. Bei mehreren Vorschubeinrichtungen, die zu einer Antriebseinrichtung zusammengefasst sind, kann die Vorschubkraft von zumindest zwei Vorschubeinrichtungen gesondert eingestellt werden. Handelt es sich bei den Vorschubeinrichtungen um Propellereinrichtungen, erfolgt ein Einstellen der Vorschubkraft durch Variieren der Propellerdrehzahl. Da die Antriebseinrichtung, d. h. die mindestens zwei Vorschubeinrichtungen der jeweiligen Antriebseinrichtungen, um mindestens eine Achse schwenkbar ist, erfolgt durch Variieren der Vorschubkräfte ein automatisches Verschwenken der Antriebseinrichtung. Hierzu sind zumindest zwei der Vorschubeinrichtungen auf unterschiedlichen Seiten der Schwenkachse angeordnet. Durch ein entsprechendes Einstellen der Vorschubkraft, beispielsweise durch Variieren der Drehzahl der Propellereinrichtungen, wird ein Moment um die Schwenkachse erzeugt. Da abgesehen von Reibmomenten in den Lagern oder durch Luftströmungen hervorgerufene Momente keine anderen Momente auf die Schwenkachse wirken, erfolgt hierdurch ein automatisches Schwenken der Antriebseinrichtungen, und somit ein Verändern der Vorschubrichtung bezogen auf die einzelne Antriebseinrichtung. Ein Vorsehen einer gesonderten Schwenkeinrichtung zum Schwenken der Antriebseinrichtung, insbesondere das Vorsehen eines Elektromotors, ist nicht erforderlich. Erfindungsgemäß sind die Antriebseinrichtungen um die jeweiligen Schwenkachsen frei drehbar. Das Drehen der Antriebseinrichtungen erfolgt erfindungsgemäß ausschließlich durch Verändern der Vorschubkräfte einzelner Vorschubeinrichtungen.

Da die einzelnen Vorschubeinrichtungen der mehreren Antriebseinrichtungen zumindest teilweise gesondert ansteuerbar sind, kann somit auf einfache Weise ein Lenken des erfindungsgemäßen Flugzeuges erfolgen.

Bei den Vorschubeinrichtungen kann es sich um Propellereinrichtungen handeln. Ferner kann es sich auch um Rotoren oder Strahltriebwerke handeln.

Sind als schwenkbare Antriebseinrichtung mit mehreren Vorschubeinrichtungen insbesondere Propellereinrichtungen vorgesehen, so weist jede Propellereinrichtung eine Vorschubrichtung auf, die der Drehachse der Propellereinrichtung entspricht. Bei horizontaler Drehachse der Propellereinrichtung erfolgt somit ein horizontaler Vorschub. Ist die Drehachse der Propellereinrichtung in einer Lage parallel zur Längsrichtung des Rumpfs erfolgt ein Vorschub in Längsrichtung des Flugzeuges. Durch ein Schwenken der Propellereinrichtung um eine vertikale Schwenkachse aus dieser Lage, kann, bezogen auf die Längsachse des Flugzeuges, ein seitlicher Vorschub erzielt werden. Durch Schwenken um eine horizontale Schwenkachse, die insbesondere senkrecht zur Längsrichtung des Flugzeuges ist, kann ohne eine wesentliche Neigung des Rumpfs hervorzurufen, ein Bewegen des Flugzeuges auf einer fallenden oder steigenden Flugbahn erfolgen. Dadurch das mindestens eine Antriebseinrichtung des Flugzeuges, bei der es sich in besonders bevorzugter Ausführungsform um eine Antriebseinrichtung mit mindestens zwei Vorschubeinrichtungen wie Propellereinrichtungen handelt, um zwei Schwenkachsen schwenkbar ist, ist ein Verändern der Position des Flugzeuges im Raum möglich, ohne dass der Rumpf hierbei geneigt wird. Es kann allenfalls eine geringfügige Neigung des Rumpfes auftreten.

Bei einer besonders bevorzugten Ausführungsform weist mindestens eine, vorzugsweise alle Antriebseinrichtungen mindestens drei, vorzugsweise mindestens vier Vorschubeinrichtungen auf. Hierbei sind die Vorschubeinrichtungen auf die vorzugsweise vorgesehenen zwei Schwenkachsen derart angeordnet, dass, bezogen auf jede der beiden Schwenkachsen, jeweils auf jeder Seite der Schwenkachse mindestens eine der Vorschubelnrichtungen vorgesehen ist. Bei zwei zueinander senkrecht stehenden Schwenkachsen und vier Vorschubeinrichtungen, wie Propellereinrichtungen, ist somit in jedem, durch die Schwenkachse gebildeten Quadranten eine Vorschubeinrichtung angeordnet. Hierbei ist es besonders bevorzugt, dass die einzelnen Vorschubeinrichtungen derart angeordnet werden können, dass die Vorschubrichtungen der einzelnen Vorschubeinrichtungen zueinander parallel sind, wobei die Vorschubrichtungen einander entgegengesetzt gerichtet sein können. Vorzugsweise sind die Vorschubrichtungen der einzelnen Vorschubeinrichtungen einer Antriebseinrichtung unabhängig von der Schwenklage der Antriebseinrichtung stets parallel zueinander.

Das erfindungsgemäße Flugzeug weist einen von mindestens einem Flügelpaar getragenen Rumpf auf. Hierbei kann das Flugzeug ein oder mehrere gesonderte Flügelpaare aufweisen. Gesonderte Flügelpaare können jedoch auch entfallen bzw. in eine Propellereinrichtung integriert sein. Hierbei dienen die Rotorblätter des Propellers als einzelne Flügel. Der Rumpf ist somit von einem Flügelelement getragen, bei dem es sich um einzelne Flügel, insbesondere einzelne Rotorblätter einer Propellereinrichtung aber auch um Flügelpaare handeln kann. Mit dem Rumpf und/ oder den Flügeln sind mehrere Propellereinrichtungen verbunden. Mindestens eine, vorzugsweise jede Antriebseinrichtung, die mehrere, insbesondere vier Vorschubeinrichtungen, wie Propellereinrichtungen aufweist, ist gegenüber dem Rumpf bzw. den Flügeln schwenkbar. Erfindungsgemäß sind die Antriebseinrichtungen unabhängig voneinander um eine oder zwei Schwenkachsen schwenkbar. Wenn nur eine statt zwei Schwenkachsen schwenkbar sind, so kann das Schwenken der nicht schwenkbaren Achse auf die Antriebseinrichtungen verlagert werden, die entsprechende Schwenkeinrichtungen aufweisen. Bei den Schwenkachsen handelt es sich Insbesondere bei stehendem Flugzeug um eine vertikal und eine horizontal verlaufende Achse. Insbesondere ist eine der Achsen senkrecht zum Rumpf und die zweite Achse senkrecht zu dieser ausgerichtet. Hierbei sind die beiden Schwenkachsen vorzugsweise derart miteinander gekoppelt, dass die Ausrichtung der zweiten Schwenkachse durch Drehen der ersten Schwenkachse verändert wird. Durch dieses in bevorzugter Ausführungsform erfindungsgemäße Vorsehen von zwei Schwenkachsen je Antriebseinrichtung ist es somit möglich, die Antriebseinrichtung beispielsweise aus einer Lage, in der die Vorschubrichtung vertikal ist, um eine erste Schwenkachse beispielsweise um 90° zu drehen, so dass die Vorschubrichtung horizontal ist. Auf Grund der Schwenkmöglichkeit um die zweite Schwenkachse kann die Vorschubrichtung durch Schwenken der Antriebseinrichtung beispielsweise aus einer Lage parallel zum Rumpf in eine Lage senkrecht zum Rumpf verändert werden. Durch eine entsprechende Ansteuerung der beiden Schwenkachsen kann die Antriebseinrichtung in jede beliebige Raumlage verschwenkt werden. Hierzu ist eine Schwenkeinrichtung erforderlich, um die Antriebseinrichtung um eine Schwenkachse zu schwenken. Um dies zu ermöglichen, muss von der Schwenkeinrichtung ein hohes Drehmoment aufgebracht werden. Besonders bevorzugt ist es daher, je Antriebseinrichtung mindestens zwei Antriebe bzw. Propeller vorzusehen. Durch unterschiedliches Ansteuern der Antriebe bzw. der Propeller, d. h. insbesondere durch Betreiben der Propeller mit unterschiedlichen Umdrehungszahlen, erfolgt automatisch ein Verschwenken der Antriebseinrichtung um die Schwenkachse. Eine zusätzliche Schwenkeinrichtung, wie ein Elektromotor zum Verschwenken der Antriebseinrichtung ist somit nicht erforderlich.

Vorzugsweise können alle Antriebseinrichtungen unabhängig voneinander in unterschiedliche Raumlagen verschwenkt werden, wobei vorzugsweise vier Vorschubeinrichtungen vorgesehen sind. Insbesondere weist jede Antriebseinrichtung mehrere, insbesondere vier Vorschubeinrichtungen, wie Propellereinrichtungen auf. Durch eine entsprechende Ausrichtung der Antriebseinrichtung kann das Flugzeug somit zunächst senkrecht starten und landen. Es ist zum Starten und Landen somit eine ausschließlich vertikale Bewegungsrichtung möglich. Durch entsprechend gesteuertes Schwenken der einzelnen Antriebseinrichtungen kann das Flugzeug nach dem Start beliebig im Raum bewegt werden. Erfindungswesentlich ist hierbei, dass durch die Tatsache, dass die Antriebseinrichtungen einzeln verschwenkt werden können, sich der Gesamtschwerpunkt des Flugzeugs nur geringfügig ändert. Hierdurch ist eine gute Manövrierfähigkeit des Flugzeugs gewährleistet. Das erfindungsgemäße Flugzeug kann somit senkrecht starten und landen, in einer horizontalen Ebene stehen sowie ohne Neigung, oder zumindest mit einer allenfalls sehr geringen Neigung in einer horizontalen Ebene fliegen. Diese auf Grund der Schwenkbarkeit der Antriebseinrichtungen um zwei Achsen erzielte Eigenschaft unterscheidet das erfindungsgemäße Flugzeug wesentlich von einem Helikopter.

Der Rumpf, der beispielsweise als Frachtcontainer ausgebildet sein kann, oder einen Frachtcontainer aufnehmen kann, ist somit mit Hilfe des erfindungsgemäßen Flugzeuges im Raum exakt positionierbar. Insbesondere kann ein Container punktgenau auf dem Boden abgesetzt oder aufgenommen werden.

Dadurch, dass erfindungsgemäß mehrere Antriebseinrichtungen, insbesondere in einem Abstand zum Rumpf vorgesehen sind, verändert ein Schwenken einzelner Antriebseinrichtungen die Lage des Gesamtschwerpunkts nur unwesentlich. Dies hat den Vorteil, dass kein Schwenken der transportierten Last erfolgt und auf gesonderte Positioniereinrichtungen und/oder Kräne für die Positionierung von Containern in Relation zum Rumpf verzichtet werden kann.

Auf Grund des erfindungsgemäßen Vorsehens von mehreren, insbesondere vier Antriebseinrichtungen, die jeweils um zwei Achsen frei schwenkbar sind, sind sämtliche Flugbewegungen ausschließlich mit Hilfe der Antriebseinrichtungen durchführbar. Allenfalls zum Starten oder Landen sind zusätzliche Antriebseinrichtungen erforderlich, sofern große Gewichte transportiert werden sollen.

Vorzugsweise sind die Antriebseinrichtungen seitlich neben dem Rumpf, insbesondere in einem Abstand zu dem Flügelpaar angeordnet. Vorzugsweise sind auf jeder Rumpfseite zwei Antriebseinrichtungen vorgesehen. Bei vier Antriebseinrichtungen sind insbesondere zwei Antriebseinrichtungen auf jeder Seite des Rumpfes angeordnet. Sofern zwei Flügelpaare vorgesehen sind, ist vorzugsweise jeweils eine Antriebseinrichtung auf jeder Seite des Rumpfes zwischen den beiden Flügelpaaren angeordnet.

Die Halterung der Antriebseinrichtungen erfolgt über ein Traggestell an dem Rumpf. Hierbei sind die Antriebseinrichtungen vorzugsweise über ein rahmenförmiges Traggestell mit dem Rumpf verbunden, wobei das rahmenförmige Traggestell in besonders bevorzugter Ausführungsform Längsträger, die insbesondere in Längsrichtung des Rumpfs verlaufen, aufweist, die mit den Flügeln verbunden sind. Hierbei erfolgt die Verbindung der Längsträger mit den Flügeln vorzugsweise im äußeren Bereich der Flügel. Sofern mehrere Flügelpaare vorgesehen sind, sind die Längsträger vorzugsweise mit den Flügeln verbunden, die zwischen Antriebseinrichtungen angeordnet sind. Auf diese Weise kann ein leichtbauendes Traggestell realisiert werden.

In besonders bevorzugter Ausführungsform ist zumindest ein Teil des Traggestells als Schwenkwelle zum Schwenken der Antriebseinrichtung um die entsprechende Schwenkachse ausgebildet. Die Schwenkwelle ist somit ein tragendes Bauteil des Traggestells und erfüllt sowohl eine tragende Aufgabe als auch das Schwenken der Antriebseinrichtung. Hierdurch kann das Gesamtgewicht weiter reduziert werden, da eine gesonderte Schwenkwelle nicht erforderlich Ist.

Da die aufzubringende Vorschubenergie beim Starten und Landen am größten ist, sind vorzugsweise Zusatz-Antriebseinrichtungen, wie Zusatzpropeller vorgesehen. Diese sind in bevorzugter Ausführungsform nicht schwenkbar und können somit äußerst leicht ausgebildet werden. Da es sich bei dem erfindungsgemäßen Flugzeug in bevorzugter Ausführungsform um einen Senkrechtstarter handelt, ist die Vorschubrichtung dieser Zusatzpropeller vertikal ausgerichtet. Insbesondere sind die Zusatzpropeller in Rumpfnähe angeordnet und vorzugsweise zumindest teilweise in den Rumpf integriert. Beispielsweise ist es möglich, die Zusatzpropeller hinter öffnenden und schließbaren Rumpfteilen, wie Klappen, Schiebetüren und dgl. anzuordnen, da die Zusatzpropeller nur zum Starten oder Landen erforderlich sind. Nach dem Starten oder Landen können die Zusatzpropeller abgeschaltet werden und die entsprechenden Klappen, Türen oder dgl. wieder verschlossen werden. Hierdurch kann eine gute Aerodynamik während des Flugs unabhängig vom Starten und Landen erzielt werden. Ferner ist hierdurch das Auftreten ungewollter Luftwirbel und störender Luftströmungen vermieden.

Bei den Propellereinrichtungen handelt es sich vorzugsweise um elektromotorisch betriebene Propeller, wobei in besonders bevorzugter Ausführungsform zur Erzeugung elektrischer Energie vom Flugzeug Generatoren, insbesondere Lineargeneratoren mitgeführt werden. Hierdurch ist eine äußerst effektive Energieausbeute möglich, so dass ein sehr gutes Verhältnis aus Schubenergie zu Gewicht erzielt werden kann. Eine Kombination aus Motor und Generator, der unmittelbar als Propellerantrieb einsetzbar ist, ist beispielsweise in DE 10 2004 048 109 beschrieben.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht einer Prinzipsskizze eines erfindungsgemäßen Flugzeuges,
- Fig. 2: eine schematische, perspektivische Ansicht einer zweiten Ausführungsform des erfindungsgemäßen Flugzeugs während eines Start- oder Landevorgangs, und
- Fig. 3: eine schematische, perspektivische Ansicht des in Fig. 2 dargestellten Flugzeugs während eines Horizontalflugs,
- Fig. 4: eine schematische, perspektivische Ansicht einer dritten Ausführungsform des erfindungsgemäßen Flugzeuges,
- Fig. 5: eine schematische, perspektivische Ansicht einer vierten Ausführungsform des erfindungsgemäßen Flugzeuges.

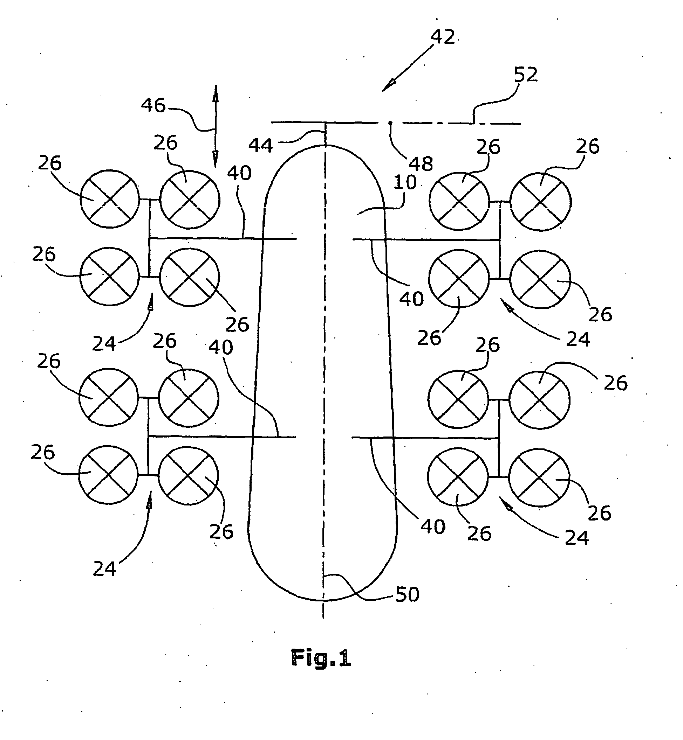

In der in Fig. 1 dargestellten Prinzipsskizze der Erfindung ist das erfindungsgemäße Flugzeug in einer einfachen prinzipiellen Ausgestaltung dargestellt. Hierbei ist ein Rumpf 10 mit vier Antriebeseinrichtungen 24 verbunden, die im dargestellten Ausführungsbeispiel jeweils vier einzelne Propellereinrichtungen 26 aufweisen. Die einzeinenPropellereinrichtungen bzw. Propeller 26 sind über Halterungen 40 mit dem Rumpf 10 verbunden. Durch die Propeller 26 kann ausschließlich ein Vorschub in vertikale Richtung, d. h. der insbesondere zum Starten und Landen erforderliche Vorschub erzeugt werden. Eine Bewegung aus der vertikalen Richtung heraus ist mittels einer weiteren Antriebseinrichtung 42, die beispielsweise nur eine Propellereinrichtung 26 aufweist, möglich. Im dargestellten Ausführungsbeispiel ist die Propellereinrichtung 42 derart angeordnet, dass die Drehachse der dargestellten Halterung 44 entspricht. Die Halterung 44 ist horizontal ausgerichtet. Mit Hilfe der Antriebseinrichtung 42 in der in Fig. 1 dargestellten Stellung kann somit ein Vorschub in Richtung des Pfeils 46 erzeugt werden. Die Antriebseinrichtung 42 ist in bevorzugter Ausführungsform um eine horizontale Schwenkachse schwenkbar. Die horizontale Schenkachse ist somit senkrecht zur Zeichenebene. Diese Schwenkachse ist in Fig. 1 durch den Punkt 48 definiert. Ferner ist die Propellereinrichtung 42 um eine horizontale, senkrecht zur Längsrichtung 50 des Flugzeuges verlaufenden Schwenkachse 52 schwenkbar. Zur Durchführung von Schwenkbewegungen um die Schwenkachsen 48, 52 weist die Antriebseinrichtung 42 vorzugsweise vier Vorschubeinrichtungen 26 auf, die wie nachstehend erläutert, angeordnet und schwenkbar sind.

Auf Grund der Möglichkeit die Antriebseinrichtung 42 um die Schwenkachsen 48 und 52 schwenken zu können, kann der Rumpf 10 des Flugzeugs in jeder Position des Raums exakt positioniert werden, wobei bei veränderter Position ein Neigen des Rumpfs 10 nicht bzw. nur im geringen Maße erfolgt.

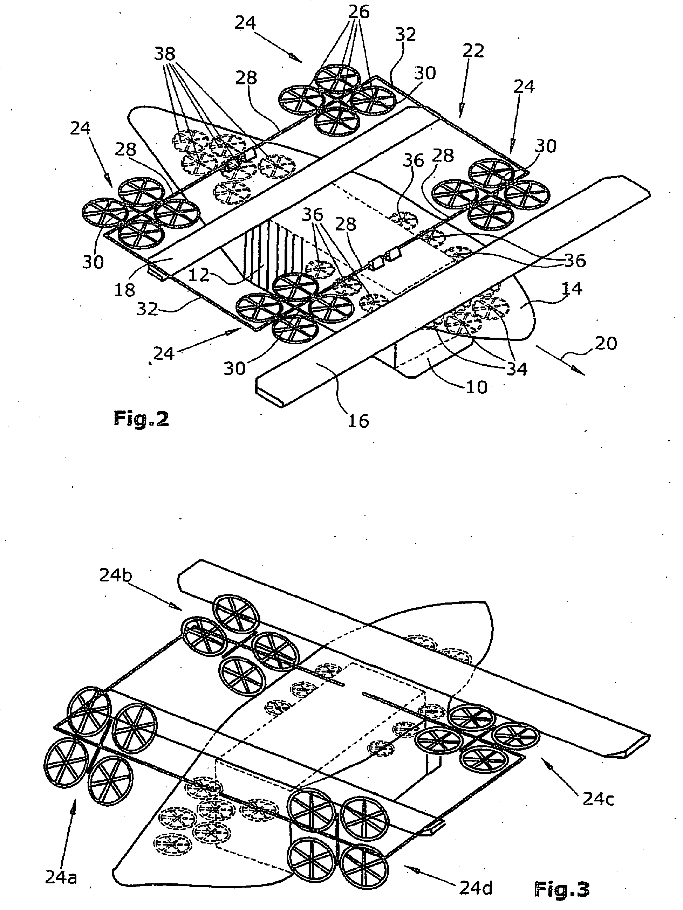

Bei einer zweiten bevorzugten Ausführungsform der Erfindung, die anhand der Figuren 2 und 3 im folgenden beschrieben wird, sind die selben und ähnliche Bauteile mit den selben Bezugszeichen gekennzeichnet.

Das insbesondere als Transportflugzeug ausgebildete Flugzeug weist einen Rumpf 10 auf, der einen Container 12, bei dem es sich um einen herkömmlichen Transportcontainer handeln kann, trägt. Der Container 12 ist hierbei insbesondere Teil des Rumpfs 10. An einem Oberteil 14 des Rumpfs 10 sind im dargestellten Ausführungsbeispiel zwei Flügelpaare 16,18 vorgesehen. Die Rumpflängsrichtung bzw. die Vorwärtsbugbewegung ist durch den Pfeil 20 angegeben.

Ferner sind mit dem Rumpf 10 über ein im dargestellten Ausführungsbeispiel rahmenförmiges, insbesondere rechteckiges Traggestell 22 vier Antriebseinrichtungen 24 verbunden. Jede der Antriebseinrichtungen 24 weist im dargestellten Ausführungsbeispiel vier Propeller 26 auf. Die gesamte Antriebseinrichtung 24 ist jeweils über eine Schwenkwelle 28 um eine entsprechende Schwenkachse 28 schwenkbar. Die Schwenkwelle 28 verläuft senkrecht zur Rumpflängsachse 20, so dass, bezogen auf einen Horizontalflug, die einzelnen Antriebseinrichtungen 24 um eine horizontale Achse 28 schwenkbar sind. Eine derartige Schwenkung ist in Fig. 3 bei der Antriebseinrichtung 24a ersichtlich.

Jede Antriebseinrichtung 24 ist nicht nur um eine Schwenkachse 28, sondern auch um eine senkrecht zu dieser Schwenkachse 28 angeordnete Schwenkachse 30 schwenkbar. Ein entsprechendes Schwenken, das ausschließlich um die Schwenkachse 30 erfolgt, ist in Fig. 3 bei der Antriebseinrichtung 24b gezeigt.

Ferner ist in Fig. 3 eine Antriebseinrichtung 24c gezeigt, die weder um die Schwenkachse 28 noch um die Schwenkachse 30 verschwenkt ist. Die Antriebseinrichtung 24d ist zunächst um 90° um die Schwenkachse 28 geschwenkt und sodann zusätzlich um einen geringen Winkel um die Schwenkachse 30 gedreht.

Das Traggestell 22 weist als Schwenkwellen 28 ausgebildete Querträger sowie Längsträger 32 auf. Die Längsträger 32 sind im dargestellten Ausführungsbeispiel mit den Flügeln 18 des hinteren Flügelpaars jeweils im äußeren Bereich verbunden. Die Längsträger 32 dienen ausschließlich zur Versteifung des Traggestells 22, sind jedoch nicht zwingend erforderlich.

Wie insbesondere aus Fig. 2 ersichtlich ist, ist es auf Grund der Möglichkeit, die einzelnen Antriebseinrichtungen 24 unabhängig voneinander um zwei Achsen 28,30 schwenken zu können, möglich, mit Hilfe einer nicht dargestellten Steuereinrichtung die Propellereinrichtungen derart anzusteuern, dass alle Flugbewegungen ausschließlich mit diesen Antriebseinrichtungen 24 erfolgen können. Hierbei wird das Gesamtflugzeug im Wesentlichen nicht geneigt. Die Lage des Gesamtschwerpunkts des Flugzeugs, der im Inneren des Containers 12 liegt, ändert sich durch Schwenken der einzelnen Antriebseinrichtungen 24 während der Flugbewegung nur geringfügig.

Da zum Starten und Landen große Schubkräfte erforderlich sind, sind in besonders bevorzugter Ausführungsform Zusatzpropeller 34,36,38 vorgesehen. Diese sind insbesondere in der Nähe des Rumpfs 10 angeordnet. Die Zusatzpropeller 34,36,38 sind in bevorzugter Ausführungsform nicht schwenkbar ausgebildet, sondern stets derart angeordnet, dass ihr Vorschub in vertikaler Richtung ausgerichtet ist. Die Zusatzpropeller 36 sind hierbei unmittelbar seitlich neben dem Rumpf 10 bzw. dem Container 12, der einen Teil des Rumpfs darstellt, angeordnet. Hierbei sind in Flugrichtung hintereinander mehrere, insbesondere drei Zusatzpropeller 36 neben dem Rumpf 10 bzw. dem Container 12 vorgesehen.

Im vorderen sowie im hinteren Bereich des Rumpfs sind die Zusatzpropeller 34,38 angeordnet. Diese sind in bevorzugter Ausführungsform in den Rumpf integriert, wobei beispielsweise durch Vorsehen von Klappen, Türen oder anderen Schließeinrichtungen die Rumpfoberfläche verschlossen werden kann, so dass die Zusatzpropeller 34,38 innerhalb des Rumpfes angeordnet sind. Nur zum Starten oder Landen werden die entsprechenden Einrichtungen geöffnet, um einen entsprechenden Vorschub in die gewünschte Richtung zu erzeugen. Das Vorsehen derartiger Einrichtungen zum Verschließen der Rumpfoberfläche hat den Vorteil, dass eine aerodynamisch günstige Oberfläche des Rumpfs während der Flugbewegungen ermöglicht ist, zumal die Zusatzpropellereinrichtungen 34, 36, 38 nur während des Starts, der Landung oder zum Manövrieren allgemein erforderlich sind.

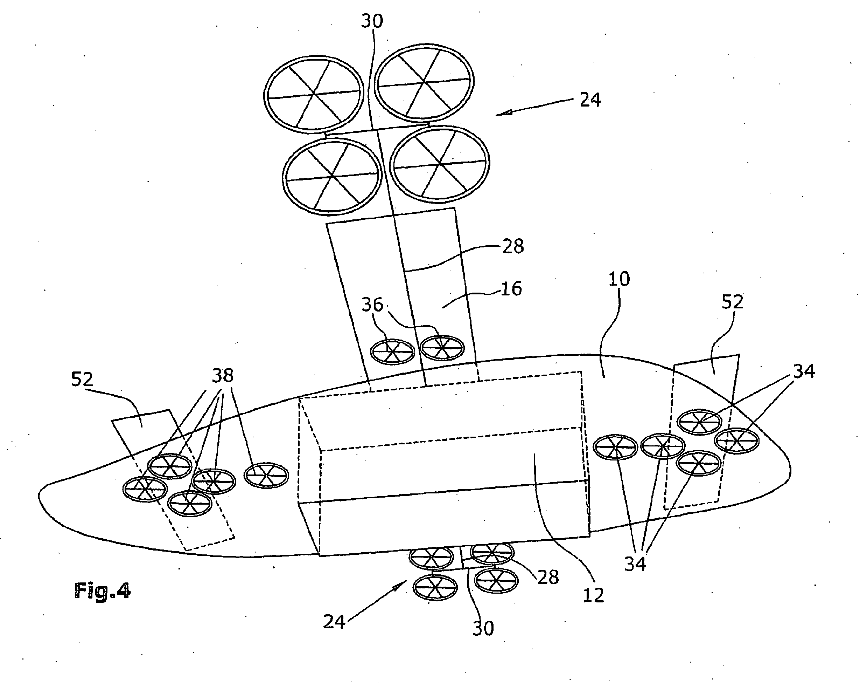

Bei einer dritten bevorzugten Ausführungsform (Fig. 4) sind ähnliche bzw. identische Bauteile mit den selben Bezugszeichen gekennzeichnet.

Ein wesentlicher Unterschied der dritten bevorzugten Ausführungsform des erfindungsgemäßen Flugzeuges (Fig. 4) besteht darin, dass ein zentrales Flügelpaar 16 vorgesehen ist. Zusätzlich sind zwei Hilfs-Flügelpaare 52 jeweils am vorderen und hinteren Ende des Rumpfes 10 angeordnet. Die Propellereinrichtungen 36, die ausschließlich zum Starten und Landen dienen, sind wie anhand des zweiten Ausführungsbeispiels beschrieben in der Nähe des Rumpfs 10 angeordnet.

Über ein insbesondere rohrförmiges Tragelement 54 sind an dem Rumpf und/oder mit dem Flügel 16 außen seitlich neben dem Flügel jeweils Antriebseinrichtungen 24 angeordnet. Die Antriebseinrichtungen 24 sind wie anhand der vorstehend beschriebenen Ausführungsform beschrieben, um zwei Achsen schwenkbar, um ein Manövrieren des Flugzeuges im Raum auf einfache Weise zu ermöglichen.

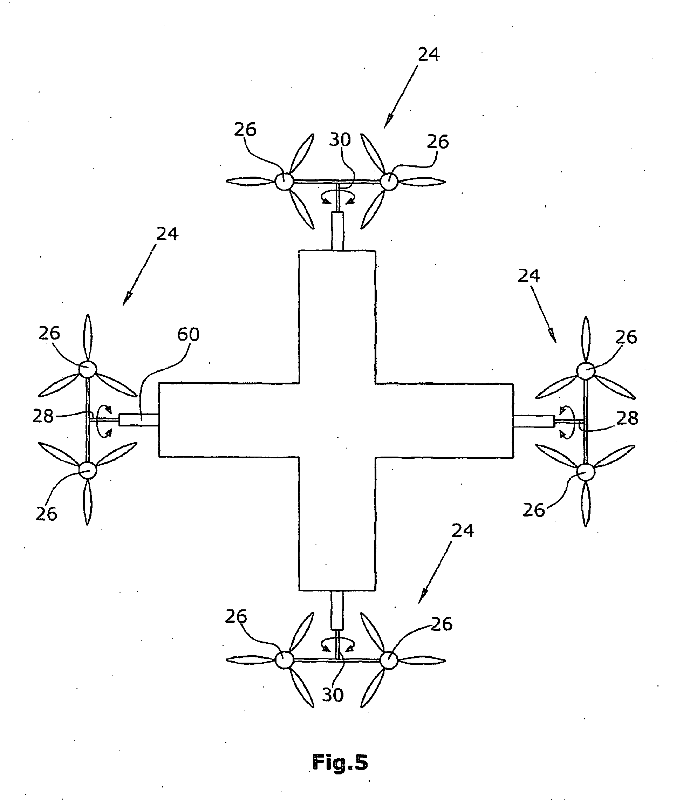

Fig. 5 weist vier Antriebseinrichtungen 24 mit jeweils zwei Propellern auf. Die beiden Propeller der Antriebseinrichtungen 24 sind um eine gemeinsame Drehachse 60 schwenkbar. Auch bei dieser Ausführungsform gelten die vorstehend gemachten Ausführungen, da die jeweils einander gegenüberliegenden Schwenkachsen 28 bzw. 30 zu einander parallel sind. Die Schwenkachsen 28 sind wiederum um 90 ° versetzt zu den Schwenkachsen 30 angeordnet, so dass der selbe Effekt wie vorstehed anhand der Figuren 1 bis 4 beschrieben, erreicht wird.

In dem in Fig. 5 dargestellten Ausführungsbeispiel sind die Antriebseinrichtungen 24 somit jeweils nur um eine Schwenkachse 28 oder 30 schwenkbar. Die beiden Schwenkachsen 28 und 30 sind in einem Winkel ungleich 0°, im dargestellten Ausführungsbeispiel in einem Winkel von 90° zueinander angeordnet.

Das Schwenken der Antriebseinrichtungen 24 um die Schwenkachsen 28 oder 30 erfolgt hierbei dadurch, dass die einzelnen Propeller 26 mit unterschiedlicher Umdrehungszahl betrieben werden.

## Patentansprüche

1. Flugzeug, insbesondere Senkrechtstarter, mit
mindestens einem einen Rumpf (10) tragenden Flügelelement (16,18), und
mindestens zwei mit dem Rumpf (10) und/ oder dem Flügelelement (16,18) verbundenen Antriebseinrichtungen (24, 42), wobei mindestens zwei der Antriebseinrichtungen (24, 42) um jeweils mindestens eine Schwenkachse (28, 30) schwenkbar ist, die Schwenkachsen einen Winkel von ungleich 0° zueinander aufweisen und
jede Antriebseinrichtung (24, 42) mindestens zwei Vorschubeinrichtungen (26) aufweist, die mit einer Steuereinrichtung zum gesonderten Einstellen der jeweiligen Vorschubkraft verbunden sind, um ein Schwenken der Antriebseinrichtung (24, 42) zu bewirken, **dadurch gekennzeichnet, dass**
mindestens eine der Antriebseinrichtungen (24) um zwei Schwenkachsen (28, 30) schwenkbar ist.

2. Flugzeug nach Anspruch 1, **dadurch gekennzeichnet, dass** die beiden Schwenkachsen (28, 30) senkrecht zueinander angeordnet sind.

3. Flugzeug nach Anspruch 1 oder 2, **dadurch gekennzeichnet, dass** die beiden Schwenkachsen jeweils senkrecht zur Vorschubrichtung (46) der Antriebseinrichtungen angeordnet sind.

4. Flugzeug nach einem der Ansprüche 1 - 3, **dadurch gekennzeichnet, dass** mindestens eine, vorzugsweise alle Antriebseinrichtungen (24 , 42) mindestens drei, vorzugsweise mindestens vier Vorschubeinrichtungen (26) aufweisen.

5. Flugzeug nach einem der Ansprüche 1 - 4, **dadurch gekennzeichnet, dass** die Vorschubrichtungen der einzelnen Vorschubeinrichtung (26) mindestens einer, vorzugsweise je Antriebseinrichtung (24, 42) zueinander parallel sind.

6. Flugzeug nach einem der Ansprüche 1 - 5, **gekennzeichnet durch** eine Steuereinrichtung zum Schwenken der Antriebseinrichtungen (24) derart, dass alle Flugbewegungen ausschließlich über die Propellereinrichtungen durchführbar sind.

7. Flugzeug nach einem der Ansprüche 1 - 6, **dadurch gekennzeichnet, dass** die Antriebseinrichtungen seitlich neben dem Rumpf (10), insbesondere beabstandet zu dem Flügelpaar (16,18) angeordnet sind.

8. Flugzeug nach einem der Ansprüche 1 - 7, **dadurch gekennzeichnet, dass** jede Antriebseinrichtung (24) über ein Traggestell (22) mit dem Rumpf (10) und/ oder den Flügelpaaren (16,18) verbunden ist.

9. Flugzeug nach Anspruch 8, **dadurch gekennzeichnet, dass** mindestens zwei, vorzugsweise alle Antriebseinrichtungen (24) über ein gemeinsames, insbesondere rahmenförmiges Traggestell (22) mit dem Rumpf (10) und/ oder den Flügelpaaren (16,18) verbunden sind.

10. Flugzeug nach Anspruch 8 oder 9, **dadurch gekennzeichnet, dass** das Traggestell (22) jeweils mit einem Flügelpaar (18) verbundene Längsträger (32) aufweist.

11. Flugzeug nach einem der Ansprüche 8 - 10, **dadurch gekennzeichnet, dass** das Traggestell (22) zur Ausbildung einer der beiden Schwenkachsen (28) eine Schwenkwelle als tragendes Bauteil aufweist.

12. Flugzeug nach einem der Ansprüche 1 - 11, **dadurch gekennzeichnet, dass** die erste Schwenkachse (28) senkrecht zur Rumpflängsrichtung (20) verläuft und während des Fluges im Wesentlichen horizontal ausgerichtet ist.

13. Flugzeug nach Anspruch 11 oder 12, **dadurch gekennzeichnet, dass** die erste Schwenkachse (28) die zweiten Schwenkachse (30) trägt.

14. Flugzeug nach einem der Ansprüche 1 - 13, **gekennzeichnet durch** Zusatzantriebseinrichtungen (34,36,38) zum Starten und Landen in vertikaler Richtung, wobei die Zusatzantriebseinrichtungen (34,36,38) vorzugsweise nicht schwenkbar sind.

15. Flugzeug nach Anspruch 14, **dadurch gekennzeichnet, dass** die Zusatzantriebseinrichtungen (34,36,38) in Rumpfnähe angeordnet sind, vorzugsweise teilweise im Rumpf integriert sind.

## Claims

1. An aircraft, in particular a vertical take-off aircraft, comprising:
at least one wing element (16, 18) carrying a fuselage (10), and
at least two drive means (24, 42) connected with the fuselage (10) and/or the wing element (16, 18), wherein at least two of the drive means (24, 42) are pivotable about a respective pivot axis (28, 30), the pivot axes are arranged under an angle not equal to 0° with respect to each other, and
each drive means (24, 42) comprises at least two thrust means (26) connected with a control means for a separate adjustment of the respective thrust force in order to effect a pivoting of the drive means (24, 42)
**characterized in that**
at least one of the drive means (24) is pivotable about two pivot axes (28, 30).

2. The aircraft of claim 1, **characterized in that** the two pivot axes (28, 30) are arranged perpendicular to each other.

3. The aircraft of claim 1 or 2, **characterized in that** the two pivot axes are arranged perpendicular to the thrust direction (46) of the drive means, respectively.

4. The aircraft of one of claims 1-3, **characterized in that** at least one, preferably all drive means (24, 42) comprise at least three, preferably at least four thrust means (26).

5. The aircraft of one of claims 1-4, **characterized in that** the thrust directions of the individual thrust means (26) of at least one drive means, preferably per drive means (24, 42), are parallel to each other.

6. The aircraft of one of claims 1-5, **characterized by** a control means for pivoting the drive means (24) such that all flight maneuvers are executable only by means of the propeller means.

7. The aircraft of one of claims 1-6, **characterized in that** the drive means are located laterally beside the fuselage (10), especially at a distance from the pair of wings (16, 18).

8. The aircraft of one of claims 1-7, **characterized in that** each drive means (24) is connected with the fuselage (10) and/or the pairs of wings (16, 18) through a support rack (22).

9. The aircraft of claim 8, **characterized in that** at least two, preferably all drive means (24) are connected with the fuselage (10) and/or the pairs of wings (16, 18) through a common, in particular frame-shaped support rack (22).

10. The aircraft of claim 8 or 9, **characterized in that** the support rack (22) comprises longitudinal beams (32) respectively connected with a pair of wings (18).

11. The aircraft of one of claims 8-10, **characterized in that** the support rack (22) has a pivot shaft as a load-bearing component to form one of the two pivot axes (28).

12. The aircraft of one of claims 1-11, **characterized in that** the first pivot axis (28) extends perpendicular to the longitudinal direction (20) of the fuselage and is oriented substantially horizontally during flight.

13. The aircraft of claim 11 or 12, **characterized in that** the first pivot axis (28) carries the second pivot axis (30).

14. The aircraft of one of claims 1-13, **characterized by** additional drive means (34, 36, 38) for take-off and landing in a vertical direction, wherein the additional drive means (34, 36, 38) are preferably not pivotable.

15. The aircraft of claim 14, **characterized in that** the additional drive means (34, 36, 38) are arranged close to the fuselage, or are preferably partly integrated in the fuselage.

## Revendications

1. Avion, particulièrement avion à décollage et atterrissage vertical, comprenant
- au moins un élément d'aile (16, 18) portant un fuselage (10), et
- au moins deux moyens d'entraînement (24, 42) raccordés audit fuselage (10) et/ou ledit élément d'aile (16, 18), au moins deux desdits moyens d'entraînement (24, 42) sont respectivement pivotables autour d'au moins un axe de pivotement (28, 30), ledit axe de pivotement présentant un angle relatif différent de 0°, et
- chaque moyen d'entraînement (24, 42) comprenant au moins deux moyens de propulsion (26), qui sont raccordés à un moyen de commande pour ajuster séparément la force propulsive respective afin d'effectuer le pivotement du moyen d'entraînement (24, 42),
**caractérisé en ce que**
au moins un des moyens d'entraînement (24) est pivotable autour de deux axes de pivotement (28, 30).

2. Avion selon la revendication 1, **caractérisé en ce que** les deux axes de pivotement (28, 30) sont disposés verticalement l'un à l#autre.

3. Avion selon la revendication 1 ou 2, **caractérisé en ce que** les deux axes de pivotement sont respectivement disposés verticalement à la direction de propulsion (46) desdits moyens d'entraînement.

4. Avion selon l'une quelconque des revendications 1-3, **caractérisé en ce qu'**au moins un, de préférence tous moyens d'entraînement (24, 42) comprend au moins trois, de préférence au moins quatre moyens de propulsion (26).

5. Avion selon l'une quelconque des revendications 1-4, **caractérisé en ce que** les directions de propulsion du moyen de propulsion unique (26) d'au moins un moyen d'entraînement (24, 42), de préférence de chaque moyen d'entraînement (24, 42), sont parallèles l'une à l'autre.

6. Avion selon l'une quelconque des revendications 1-5, **caractérisé par** un moyen de commande pour pivoter les moyens d'entraînement (24) de manière à ce que tous manoeuvres de vol puissent être effectués exclusivement en utilisant les moyens d'hélice.

7. Avion selon l'une quelconque des revendications 1-6, **caractérisé en ce que** les moyens d'entraînement sont disposés latéralement à côté du fuselage (10), particulièrement écarté de ladite paire d'ailes (16, 18).

8. Avion selon l'une quelconque des revendications 1-7, **caractérisé en ce que** chaque moyen d'entraînement (24) est raccordé avec ledit fuselage (10) et/ou lesdites paires d'ailes (16, 18) par un bâti de support (22).

9. Avion selon la revendication 8, **caractérisé en ce qu'**au moins deux, de préférence tous moyens d'entraînement (24) sont raccordés avec le fuselage (10) et/ou lesdites paires d'ailes (16, 18) par un bâti de support (22) commun, particulièrement en forme d'un cadre.

10. Avion selon la revendication 8 ou 9, **caractérisé en ce que** le bâti de support (22) comprend des longerons (32) respectivement raccordés avec une paire d'ailes (18).

11. Avion selon l'une quelconque des revendications 8-10, **caractérisé en ce que** le bâti de support (22) comprend un arbre de pivotement comme élément structurel portant pour former un des deux axes de pivotement (28).

12. Avion selon l'une quelconque des revendications 1-11, **caractérisé en ce que** le premier axe de pivotement (28) s'étend verticalement à la longueur du fuselage (20) et est orienté sensiblement horizontalement pendant le vol.

13. Avion selon la revendication 11 ou 12, **caractérisé en ce que** le premier axe de pivotement (28) porte le deuxième axe de pivotement (30).

14. Avion selon l'une quelconque des revendications 1-13, **caractérisé par** des moyens d'entraînement additionnels (34, 36, 38) pour le décollage et l'atterrissage vertical, les moyens d'entraînement additionnels (34, 36, 38) préférentiellement n'étant pas pivotables.

15. Avion selon la revendication 14, **caractérisé en ce que** les moyens d'entraînement additionnels (34, 36, 38) sont disposés près du fuselage, de préférence partiellement intégrés dans le fuselage.
